# EUROPEAN PATENT APPLICATION

(11) **EP 2 101 211 A1**
(43) Date of publication of application: **16.09.2009**
(21) Application number: 07859683.0
(22) Date of filing: 28.12.2007
(51) Int. Cl.: G02C 7/04, B23K 26/00, B23K 26/12

(54) **PRODUCTION METHOD OF CONTACT LENS WITH MARK AND CONTACT LENS WITH MARK**

(30) Priority: 28.12.2006 JP 2006356011
(71) Applicant: Menicon Co., Ltd., Nagoya-shi Aichi 460-0006 (JP)
(72) Inventor: ONISHI, Toru, Kakamigahara-shi Gifu 509-0108 (JP); SUZUKI, Hiroaki, Kasugai-shi Aichi 487-0032 (JP); GOTO, Takashi, Kakamigahara-shi Gifu 509-0108 (JP)
(74) Representative: Forsythe, Dominic
(86) International application number: PCT/JP2007/001498
(87) International publication number: WO 2008/081599

(57) **Abstract**

A novel manufacturing method of a contact lens with a mark, wherein the method affords better production efficiency and reduced uplift of the outside peripheral edge of the engraved mark in association with laser machining, as well as ensuring adequate surface roughness of the engraved mark, thereby advantageously achieving the dual aims of good wear comfort and good visibility of the mark produced by engraving; and a contact lens with a mark of novel construction. The method comprises the steps of irradiating a laser beam onto a location (72) on a die (34) which corresponds to an objective mark (26) while the location (72) is submerged in a liquid (66) to form an engraved mark (62), and transferring the engraved mark (62) via a resin mold (54) formed by the die (34) to impart the mark (26) to at least one of a lens front face (12) and a lens rear face (14).

## Description

### TECHNICAL FIELD

The present invention relates to a manufacturing method of a contact lens with a mark adapted for production of contact lens provided with an identifying mark; and to a contact lens with a mark.

### BACKGROUND ART

Contact lenses of soft type or hard type, or that combine elements of both (hereinafter collectively termed "contact lenses"), are sometimes provided on the lens surface with an indicia (mark) for the purpose of identifying whether the lens is intended for wear in either the left or right eye; to identify the circumferential position of the lens during wear; or to indicate control information such as lens serial number, lot number, or the like.

Techniques for inscribing a contact lens with such marks have been disclosed, for example, in Patent Citation 1 (JP 62-31821 A) and Patent Citation 2 (JP 4-270312 A), which teach methods such as impregnating the interior of the molded lens with a dye, followed by development and fixation of the impregnated dye through a chemical reaction. However, since such methods require a process for impregnating each molded lens with dye, production efficiency is diminished. There is also a high defect rate associated with the frequent handling of the molded lenses entailed in the production process. Also, with contact lens imparted with marks by such methods, there is a risk that the mark will become obliterated or dye will seep out from the lens with repeated cleaning of the lens through rubbing, boiling, and so on.

Accordingly, by way of laser processes currently under examination with regard to implementation for the purpose of forming a mark on a lens surface, there have been proposed, for example in Patent Citation 3 (JP 62-37368 B) and Patent Citation 4 (JP 64-13520 A), methods of inscribing a mark by irradiating a laser beam of high-density focused light energy onto the lens face to melt or vaporize the surface; in Patent Citation 5 (JP 5-67932 B) to direct a laser beam on the molding surface of the mold which will be used for molding the contact lens, in order to inscribe a mark for transfer to the lens face; and in Patent Citation 6 (JP 7-186290 A), Patent Citation 7 (JP 8-194193 A), and Patent Citation 8 (JP 2002-82320 A), to direct a laser beam onto the die which will be used to mold the resin mold for molding the contact lens, in order to inscribe a mark for transfer to the lens face via the resin mold. With such processes, since the mark is formed by actual engraving onto the lens surface, excellent shape retention characteristics with respect to repeated rubbing can be afforded, and the mark contours can preserved for an indefinite period. Additionally, as extra materials such as dyes are not required, production efficiency may be improved as well.

In the laser processes described above however, the heat produced by light energy can sometimes cause the outside peripheral edge of the engraved mark to uplift, producing swelling which protrudes out from the processed surface that is being irradiated with the laser beam. In particular, when forming a contact lens mark that needs to be very small, if the engraved mark is being made somewhat deeper in order to ensure the desired visibility, it is common practice to reduce the scanning speed of the laser beam or to adjust the pitch width; however, the result of doing so will be that heat becomes concentrated at the engraved mark, posing a risk of even greater swelling of the peripheral edge. If the protruding portion produced by such swelling becomes too large, contact pressure against the eyelid and cornea may increase to the point that there is considerable discomfort, and movement of the lens is impaired.

In laser machining as discussed above, sufficiently large peak and valley contours do not form on the processed surface, and sufficient surface roughness of the mark cannot be achieved. For this reason, scattering of light by the mark tends to be low, creating the problem of insufficient visibility of the mark. Additionally, as swarf produced during laser irradiation can cause contamination and molding defects, a washing process is required for the purpose of removing the swarf, and this washing process contributes to lower production efficiency.

Patent Citation 1: JP 62-31821 A
Patent Citation 2: JP 4-270312 A
Patent Citation 3: JP 62-37368 B
Patent Citation 4: JP 64-13520 A
Patent Citation 5: JP 5-67932 B
Patent Citation 6: JP 7-186290 A
Patent Citation 7: JP 8-194193 A
Patent Citation 8: JP 2002-82320 A

### DISCLOSURE OF THE INVENTION

### Problem the Invention Attempts to Solve

With the foregoing in view, it is accordingly one object of the present invention to provide a novel manufacturing method of a contact lens with a mark, wherein the method affords better production efficiency and reduced uplift of the outside peripheral edge of the engraved mark in association with laser machining, as well as ensuring adequate surface roughness of the engraved mark, thereby advantageously achieving the dual aims of good wear comfort and good visibility of the mark produced by engraving; and to provide a contact lens with a mark of novel construction.

### Means for Solving the Problem

The above objects of this invention may be attained according to at least one of the following modes of the invention. The following elements employed in each mode of the invention described below may be adopted at any possible optional combinations.

Specifically, the present invention in a first mode relates to a manufacturing method of a contact lens with a mark using a resin mold which has been molded in a die to mold at least one lens face among a convex lens front face and a concave lens rear face and to provide a mark to at least one of the front face and the rear face, the method being characterized by the steps of: carrying out engraving by irradiating a laser beam onto a location on the die which corresponds to the objective mark while the location is submerged in a liquid; and transferring the engraved mark via the resin mold to impart the mark to at least one of the lens front face and the lens rear face.

With the manufacturing method according to the present mode, swelling of the outside peripheral edge of the engraved mark formed in the die can be kept to a low level as compared to the case where the mark is made on the die through laser machining carried out in air. Thus, protrusion of the outside peripheral edge of the mark which is formed on the lens face through transfer of the engraved mark can be minimized, and contact pressure against the eyelid and cornea can be reduced thereby improving wear comfort and affording smoother movement of the lens. Additionally, because larger peak and valley contours can be formed on the machined surface of the engraved mark, the mark can be imparted with greater surface roughness. Scattering of light can be produced more effectively at the mark surface thereby, making it possible to improve the visibility of very small mark made on the contact lens.

Further, in the present mode, laser machining is carried out on the die, and the engraved mark formed in the die is then transferred to the lens surface through the agency of a resin mold. Accordingly, the only additional step is that of carrying out laser machining of the die, and subsequent steps may be carried out in the same manner as in known art mold molding methods. Thus, excellent production efficiency can be achieved with substantially no increase in the number of steps on the production line, and excellent consistency of quality with respect to mark shape can be achieved. Additionally, by carrying out laser machining in liquid, deposition of swarf produced by laser machining can be reduced. Thus, contamination and molding defects which can be caused by deposited swarf can be reduced, obviating the need for a washing step so as to afford even better production efficiency.

A second mode of the present invention relating to a manufacturing method of a contact lens with a mark provides a manufacturing method of a contact lens in accordance with the first mode wherein during irradiation of the die by the laser beam, an irradiation optical axis of the laser beam onto the die is inclined by 30 degrees or more with respect to a vertical line extending upward from the die.

With the manufacturing method according to the present mode, overlap between the direction of ascent of bubbles which form during laser machining in liquid, and the direction of the irradiation optical axis of the laser beam, can be reduced, thereby reducing interference between the bubbles and the laser beam. It will thus be possible to reduce or avoid situations where the laser beam is deflected by bubbles and falls on a position different from the intended position, so as to afford better machining accuracy.

In preferred practice, the irradiation optical axis of the laser beam onto the die will be inclined by 90° or more with respect to a vertical line extending upward from the die. That is, by irradiating the laser beam onto the die from the horizontal direction, interference between the bubbles and the laser beam can be reduced further.

A third mode of the present invention relating to a manufacturing method of a contact lens with a mark provides a manufacturing method of a contact lens in accordance with the first or second mode wherein the die is irradiated with the laser beam while creating flow of the liquid in which the location on the die corresponding to the objective mark has been submerged.

With the manufacturing method according to the present mode, bubbles and swarf produced during laser machining can be carried away from the irradiation optical axis of the laser beam, thus reducing interference between the laser beam on the one hand, and bubbles and swarf on the other. It will thus be possible to reduce the risk that the laser beam will be deflected by bubbles to a direction different from the intended one, or that the light energy of the laser beam will be reduced by swarf, so as to afford better machining accuracy. Moreover, deposition of swarf onto the engraved mark can be reduced, thus affording a better cleaning action.

A fourth mode of the present invention relating to a manufacturing method of a contact lens with a mark provides a manufacturing method of a contact lens in accordance with any of the first to third modes wherein the laser beam impinges on the liquid and irradiates on the die through a shield material adapted to transmit the laser beam and positioned in intimate contact against a surface of the liquid which is a laser beam incidence face.

With the manufacturing method according to the present mode, the shield material will serve to limit the occurrence of ripples on the liquid surface, thus providing a flat incidence face for the laser beam. Thus, situations where the laser beam is deflected to a direction different from the intended one by a wavy surface can be avoided, and the direction of the laser beam irradiation optical axis can be consistently maintained in the desired direction.

In particular, the present mode is more preferably employed in combination with the preceding third mode. That is, when flow is created in the liquid, ripples will be more likely to occur on the liquid surface, but by employing the shield material of the present embodiment the occurrence of ripples at the laser beam incidence face can be advantageously reduced.

The specific construction of the shield material in the present mode may employ any of a number of appropriate shapes selected in consideration of the placement location of the die, the direction of the laser beam irradiation optical axis, or other factors. Also, the laser beam incidence face is not necessarily limited to the upper surface of the liquid, and so the shield material is not limited to being positioned at the liquid upper surface. That is, where for example the liquid has been placed inside a glass case adapted to transmit the laser beam, the die has been submerged in the liquid, and the laser beam travels in the horizontal direction from the peripheral wall of the glass case, the peripheral wall of the glass case could serve as the shield material.

A fifth mode of the present invention relating to a manufacturing method of a contact lens with a mark provides a manufacturing method of a contact lens in accordance with any of the first to fourth modes wherein the liquid comprises distilled water. With the manufacturing method according to the present mode, the risk of diminished machining accuracy or machining efficiency due to interference with the laser beam by impurities in the liquid can be reduced.

A sixth mode of the present invention relating to a manufacturing method of a contact lens with a mark provides a manufacturing method of a contact lens in accordance with any of the first to fourth modes wherein the liquid comprises an aqueous solution containing at least one compound selected from monohydric alcohols, polyhydric alcohols, surfactants, polysaccharides, and sodium chloride.

With the manufacturing method according to the present mode, the height of the uplifted portion that forms in the engraved mark circumjacent area can be kept to a minimum so that wear comfort of the contact lens may be improved. Through appropriate selection, according to the particular objective, of a compound for mixing into the aqueous solution, it is possible to suitably control the conditions of laser machining and thus to form the engraved mark more advantageously. As a specific example, machining accuracy can be improved by inhibiting formation of bubbles in the liquid during laser irradiation. It also becomes possible to advantageously modify surface roughness of the engraved mark and engraved mark depth, making it possible to produce an engraved mark with higher visibility.

A seventh mode of the present invention relating to a manufacturing method of a contact lens with a mark provides a manufacturing method of a contact lens in accordance with the sixth mode wherein the aqueous solution containing at least one compound selected from ethanol as the monohydric alcohol, propylene glycol as the polyhydric alcohol, polyoxyethylene60 hydrogenated castor oil or sodium lauryl sulfate as the surfactant, and pullulan as the polysaccharide, is used as the liquid.

With the manufacturing method according to the present mode, through the use of an aqueous solution containing any of the components listed above, there can be advantageously achieved an effect of limiting the height of the uplifted portion in the engraved mark circumjacent area during laser machining, and an effect of improving the accuracy of engraved mark formation.

An eighth mode of the present invention relating to a manufacturing method of a contact lens with a mark provides a manufacturing method of a contact lens in accordance with the seventh mode wherein the liquid comprises a mixed aqueous solution of propylene glycol and ethanol.

With the manufacturing method according to the present mode, precision formation of the engraved mark on the die becomes possible, and thus visibility of the marking imparted to the contact lens can be enhanced.

A ninth mode of the present invention relating to a manufacturing method of a contact lens with a mark provides a manufacturing method of a contact lens in accordance with the eighth mode wherein the liquid comprises the aqueous solution selected from a 2 to 5 w/v% propylene glycol aqueous solution, a 0.05 to 0.2 w/v% polyoxyethylene60 hydrogenated castor oil aqueous solution, a 0.02 to 0.1 w/v% sodium lauryl sulfate aqueous solution, and a mixed aqueous solution of 2 w/v% propylene glycol and 5 to 10 w/v% ethanol.

. With the manufacturing method according to the present mode, it will be possible to more appropriately control the conditions of laser machining in liquid, and as a result, contact lenses with improved marking visibility and improved wear comfort during contact lens wear may be produced.

A tenth mode of the present invention relating to a manufacturing method of a contact lens with a mark provides a manufacturing method of a contact lens in accordance with any of the first to ninth modes wherein a molding face of the die that is imparted with the engraved mark is made of either stainless steel, aluminum, high-speed steel, prehardened steel, or phosphor bronze.

With the manufacturing method according to the present mode, by using a die of a material that is suited to laser machining, the engraved mark can be formed with higher machining accuracy. Thus, the quality of the mark shape formed on the lens face through transfer of the engraved mark can be improved further.

An eleventh mode of the present invention relating to a manufacturing method of a contact lens with a mark provides a manufacturing method of a contact lens in accordance with any of the first to tenth modes wherein the mark comprises an alphanumeric character and graphic symbol.

With the manufacturing method according to the present mode, more distinct alphanumeric characters or graphic symbols can be formed by way of marks. That is, because deformation such as swelling at the mark edges is reduced by the manufacturing method according to the present invention, it will be possible to advantageously avoid situations where the alphanumeric character or graphic symbol becomes obliterated, making it possible to further reduce the size of contact lens marks that need to be formed with smaller size. It becomes possible thereby to form more alphanumeric characters or graphic symbols within a limited area, making it possible to impart more information.

The present invention in a first mode relating to a contact lens with a mark provides a contact lens with a mark having at least one lens face among a convex lens front face and a concave lens rear face thereof formed using a resin mold that has been formed by a die, at least one of the front face and the rear face being imparted with a mark produced through transfer thereto, through the agency of the resin mold, of an engraved mark that has been formed on a molding face of the die by irradiation with a laser beam, the contact lens with a mark being characterized in that: surface roughness: Ra of the mark is 0.2 µm or greater.

With the contact lens with a mark constructed according to the present mode, light scattering action at the mark surface can be advantageously obtained. Thus, excellent visibility can be achieved, even in a very small mark formed on a contact lens. Marks having such excellent visibility can be advantageously formed using the manufacturing method in accordance with the present invention.

A second mode of the present invention relating to a contact lens with a mark provides a contact lens with a mark in accordance with the first mode wherein a height dimension of an outside peripheral edge part of the mark is 1.5 µm or less.

With the contact lens with a mark constructed according to the present mode, by keeping the height dimension of the outside peripheral edge part of the mark to a small value, contact pressure of the mark outside peripheral edge against the eyelid and cornea can be minimized. This will afford excellent wear comfort and afford smooth movement of the lens. Marks having such small height dimension of the outside peripheral edge part can be advantageously formed using the manufacturing method in accordance with the present invention.

A third mode of the present invention relating to a contact lens with a mark provides a contact lens with a mark in accordance with the first or second mode wherein a depth dimension of the mark is between 3 µm and 15 µm.

With the contact lens with a mark constructed according to the present mode, excellent visibility of the mark may be achieved while maintaining ample strength of the lens. However, if the depth dimension of the mark is too small, the mark may become indistinct so that good visibility will not be attained; whereas if the depth dimension of the mark is too great, lens thickness in the mark formation zone will become too small and strength will be lost. Marks having such excellent visibility yet able to ensure adequate lens strength can be advantageously formed using the manufacturing method in accordance with the present invention.

### BRIEF DESCRIPTION OF THE DRAWINGS

FIG. 1 is a partly cutaway perspective illustration of a contact lens according to a first embodiment of the present invention;
FIG. 2 is a front view illustration of a mark on the contact lens;
FIG. 3 is an illustration depicting the cross sectional contours of the mark;
FIG. 4 is an illustration depicting the surface of the mark;
FIG. 5 is a longitudinal sectional illustration showing a die used for molding a female mold for use in production of the contact lens depicted in FIG. 1;
FIG. 6 is a longitudinal sectional illustration depicting a production step of the contact lens;
FIG. 7 is a fragmentary enlarged illustration taken from FIG. 6;
FIG. 8 is a longitudinal sectional illustration depicting another production step of the contact lens depicted in FIG. 1;
FIG. 9 is a longitudinal sectional illustration depicting yet another production step of the contact lens;
FIG. 10 is a longitudinal sectional illustration depicting a different mode of a production step of the contact lens;
FIG. 11 is a side view illustration depicting a different mode of a water current generating unit;
FIG. 12 is a longitudinal sectional illustration depicting yet a different mode of a production step of the contact lens;
FIG. 13 is a front view illustration depicting an engraved mark made in a die;
FIG. 14 is a measurement diagram showing results of longitudinal cross section contour measurement of a die in Example 1;
FIG. 15 is a measurement diagram showing results of longitudinal cross section contour measurement of a die in Comparative Example 1;
FIG. 16 is a measurement diagram showing results of transverse cross section contour measurement of a die in Example 2; and
FIG. 17 is a measurement diagram showing results of transverse cross section contour measurement of a die in Comparative Example 2.

### Key to Symbols

10: contact lens; 26: mark; 28: groove; 30: surface; 32: lip portion; 34 female mold molding die; 38: upper die core; 42: resin molding face; 54: lens molding female mold; 56: lens molding male mold; 62: engraved mark; 66: liquid; 68: jig; 72: irradiation position; 74: laser machining unit

### BEST MODE FOR CARRYING OUT THE INVENTION

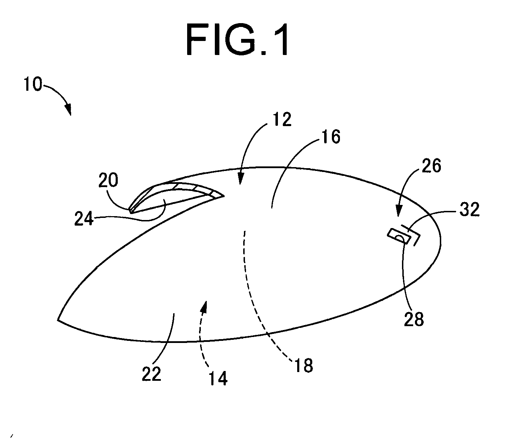

A fuller understanding of the present invention will be provided through the following detailed description of the preferred embodiments of the invention. First, FIG. 1 depicts a contact lens 10 according to a first embodiment of the present invention. The contact lens 10 has a thin, generally spherical shell shape overall, and is adapted to be worn superimposed against the surface of the cornea of the eye. The term "wear" herein refers to use placed in the human eye.

To describe in greater detail, it is possible for the contact lens 10 according to the present embodiment to be implemented in contact lenses of various different kinds such as soft contact lenses, hard contact lenses, or disposable type contact lenses. The contact lens 10 will employ a resin material composed of any of various polymerizable monomers endowed with optical properties such as light transmissivity, specific examples being hydroxyethyl methacrylate (HEMA), polymethyl methacrylate (PMMA), cellulose acetate butyrate (CAB), silicone copolymers, fluorosilicone acrylate, fluorocarbon polymers, or silicone rubber.

The contact lens 10 has the lens center axis as its optical axis, and is of rotationally symmetric shape about the lens center axis. The lens outside face is defined by a lens front face 12 of convex shape, while the lens inside face is defined by a lens rear face 14 of concave shape. Additionally, in the center section of the contact lens 10, a front face optical zone 16 and a rear face optical zone 18 of circular shape are respectively formed on the lens front and rear faces 12, 14.

In order to afford substantially similar shape to the cornea surface on which it will be worn during wear, the rear face optical zone 18 has a center of curvature established at the lens rear on the lens center axis, and has been designed with a base curve face having a longitudinal cross-sectional profile of concave shape of an appropriate curvature radius. In consideration of factors such as the shape of the cornea and other wear parameters, or of required optical characteristics, the longitudinal cross-sectional profile of the base curve face may employ any of various bowed concave cross section profiles of spherical form, for example, one having a constant curvature radius; or one having a curvature radius that varies in the circumferential direction.

Meanwhile, the front face optical zone 16 has a bowed convex profile adapted to impart the objective optical characteristics, such as lens power, in cooperation with the base curve face which has been established as above.

The front face optical zone 16 and the rear face optical zone 18 define an optical zone imparted with optical characteristics, such as lens power, which are appropriate for vision correction. The optical zone is a zone adapted to afford the expected optical effect to the eye of the wearer; the outside peripheral edge thereof, in other words, the boundary with a peripheral zone (discussed later), can generally be understood to be a curvature inflection point on the longitudinal cross section of the lens front face 12 and the lens rear face 14 respectively; but where for example the lens face of the optical zone is designed with a longitudinal cross-sectional profile that gradually varies in the radial direction, or where the boundary is formed by a connecting zone or the like of prescribed width in the radial direction and smoothly connecting with the optical zone and the peripheral zone between the lens front and rear faces 12, 14, it will not always be necessary for the boundary between the optical zone and the peripheral zone on the lens front and rear faces 12, 14 to have the morphology of a distinct line.

The peripheral zone and an edge zone 20 are formed in the peripheral section that encircles the optical zone of the contact lens 10. The edge zone 20 has an annular shape at the outermost peripheral edge part of the contact lens 10, and viewed in lens longitudinal cross section is provided with a lens front and rear face of chamfered contours that extend inwardly from an outside peripheral edge face of generally semicircular contours. Additionally, the lens front and rear faces of the edge zone 20 connect with front and rear face peripheral zones 22, 24.

The front face peripheral zone 22 and the rear face peripheral zone 24 are each of annular shape having the lens center axis as their center and extending continuously in the circumferential direction with prescribed width dimension in the radial direction; and are disposed straddling between the front and rear face optical zones 16, 18 and the edge zone 20 of the lens 10. That is, in cooperation with the front face peripheral zone 22 and the rear face peripheral zone 24, these zones define a peripheral zone situated to the outside peripheral side of the optical zone of the lens.

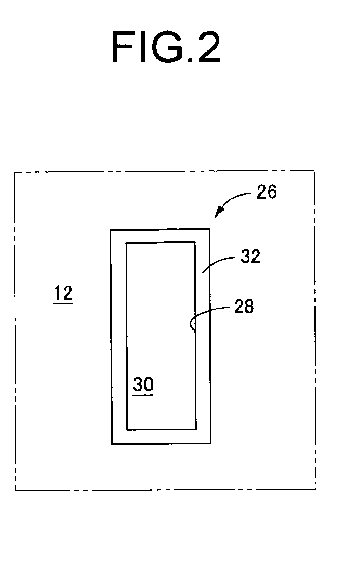

A mark 26, depicted in FIG. 2, is imparted at a prescribed location on the front face peripheral zone 22. The mark 26 is provided for the purpose of identifying, for example, the front or rear face of the lens, the location of a given section, or whether the lens 10 is for use in the left eye or the right eye; no particular limitation is imposed as to its shape, size, or design, and various different alphanumeric characters or graphic symbols could be used. In the present embodiment for example, a "-" shape is formed by a groove 28 that opens onto the front face of the lens 10.

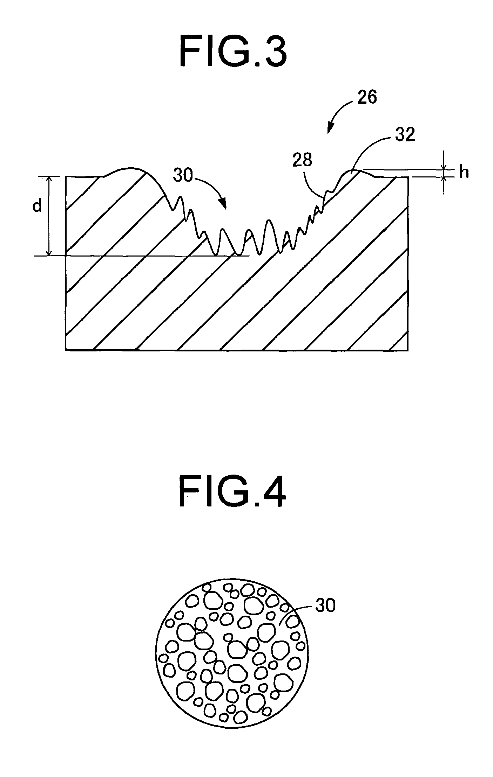

FIG. 3 is a model depiction of cross sectional contours of the mark 26, and FIG. 4 is a partially enlarged model depiction of a surface 30 of the mark 26. The outside peripheral edge of the mark 26 has a lip portion 32 extending around its entire perimeter and projecting up from the lens surface. In the present embodiment, the projecting height dimension: h of the lip portion 32 is kept to 1.5 µ or less. The projecting height dimension: h refers to the height dimension taken from the lens surface. Thus, in the contact lens 10 of the present embodiment, the lip portion 32 of the mark 26 will have limited contact pressure against the eyelid, affording excellent wear comfort and smooth movement of the lens.

The bottom face of the groove 28, in other words the surface 30 of the mark 26, is a rough surface having peak and valley contours. As depicted in FIG. 4, these peak and valley contours are defined by a multitude of tiny holes of various sizes formed in a dispersed point pattern on the bottom face of the groove 28. In the present embodiment, the surface roughness: Ra of the surface 30 is 0.2 µm or greater. It is accordingly possible for the contact lens 10 of the present embodiment to advantageously give rise to scattering of light at the surface 30, thus affording excellent visibility.

Additionally, the depth dimension: d of the mark 26, in other words of the groove 28, is set to within a range of between 3 µm and 15 µm. The depth dimension: d in the present embodiment refers to the depth dimension taken from the lens surface; since the surface 30 is a rough surface, it specifically refers to average depth dimension at the three deepest points on the surface 30. Thus, the contact lens 10 in the present invention affords excellent visibility of the mark 26 while maintaining good lens strength. However, if the depth dimension: d is too small, the mark 26 will be indistinct; whereas if the depth dimension: d is too great, there is a risk that diminished strength of the contact lens 10 will become a problem.

Next, a specific example of a method advantageously used during production of a contact lens 10 imparted with such a mark 26 will be described.

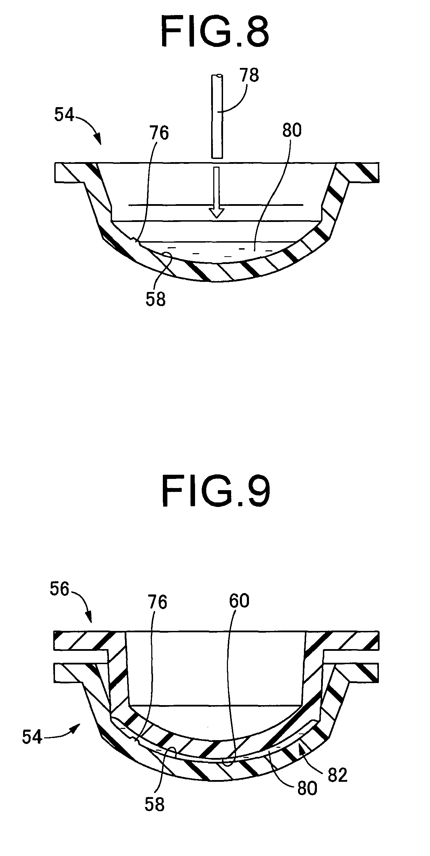

First, a female mold molding die 34 and a male mold molding die (not shown) are prepared as the dies. These dies for molding the male and female molds will be used independently to respectively mold, using known art resin molding methods, a lens molding female mold 54 and a lens molding male mold 56 (see FIG. 9) provided as the resin molds for the purpose of obtaining the objective contact lens 10 through mold molding (polymerization). These molding dies will favorably employ stainless steel, aluminum, high speed steel, prehardened steel, phosphor bronze, or similar material suitable for laser machining, discussed later; however, any other metal materials may be used.

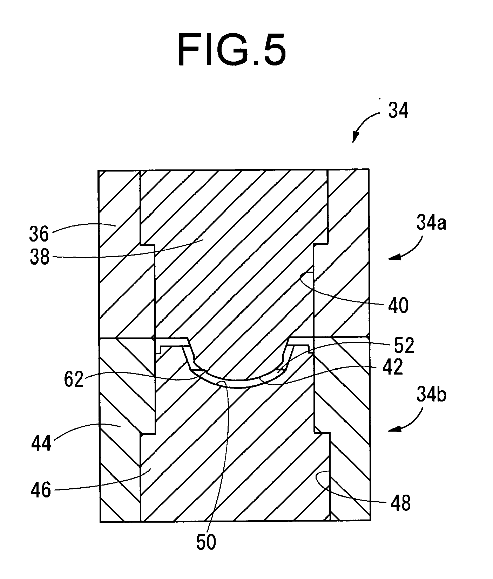

FIG. 5 depicts the female mold molding die 34. The female mold molding die 34 is composed of a female mold molding upper die 34a and a female mold molding lower die 34b which are mounted onto the fixed platen of a locking device, not shown. The female mold molding upper die 34a is composed of an upper die base 36 and an upper die core 38 that are respectively mounted fixedly on mounting plates (not shown) that are affixed to the fixed platen. The upper die base 36 has an oblong block shape, and is provided in its center section with an installation hole 40 passing through it in the mold closure direction. The upper die core 38 is attached fitting within this installation hole 40. A resin molding face 42 of convex spherical contours constituting the molding face is formed in the center section of the lower end face of the upper die core 38. This convex resin molding face 42 has contours corresponding to the generally spherical convex contours of the lens front face 12 of the contact lens 10.

Meanwhile, the female mold molding lower die 34b is composed of a lower die base 44 and a lower die core 46 that are respectively mounted fixedly on mounting plates (not shown) affixed to the fixed platen. The lower die base 44 has an oblong block shape, and is provided in its center section with an installation hole 48 passing through it in the mold closure direction. The lower die core 46 is attached fitting into this installation hole 48. A resin molding face 50 of concave spherical shape is formed in the center section of the upper end face of the lower die core 46.

The female mold molding upper die 34a and the female mold molding lower die 34b are then shut in the axial direction by the locking device (not shown), thereby defining a mold cavity 52 between the mating faces of the two dies 34a, 34b. This mold cavity 52 is then filled with a thermoplastic resin material injected by an injection molding device (not shown) for example and then cooled and solidified. Examples of thermoplastic resin materials are polypropylene, polyethylene, polyethylene terephthalate, polystyrene, polycarbonate, vinyl chloride, nylon, polyacetal, fluororesins, and so on; any of these may be used. The molded article made of resin material is then extracted by parting the two dies 34a, 34b. The lens molding female mold 54 (see FIG. 9) is obtained thereby. Here, a concave spherical-shaped lens molding face 58 of the lens molding female mold 54 has been formed by the resin molding face 42 of the upper die core 38, thereby giving it a shape that corresponds to the lens front face 12 of the contact lens 10.

Meanwhile, like the female mold molding die 34, the male mold molding die is composed of a male mold molding upper die and a male mold molding lower die, with a mold cavity corresponding in shape to the lens molding male mold 56 (see FIG. 9) defined between the mating surfaces of the two dies; using the male mold molding die, the lens molding male mold 56 is molded by an operation comparable to that for the female mold molding die 34. Since the construction of the male mold molding die is substantially identical to that of the female mold molding die 34, the male mold molding die has been omitted from the illustration here. Then, using a thermoplastic resin material and the male mold molding die, the lens molding male mold 56 will be obtained by a resin molding method comparable to that for the lens molding female mold 54. Here, a convex spherical-shaped lens molding face 60 of the lens molding male mold 56 has been formed by the convex resin mold molding face of the upper die core, thereby giving it a shape that corresponds to the lens rear face 14 of the contact lens 10.

In this embodiment in particular, while the die is immersed in liquid an engraved mark 62 has been formed on the resin molding face 42 of the upper die core 38 of the female mold molding die 34 by means of laser machining at a location corresponding to the mark 26 of the contact lens 10.

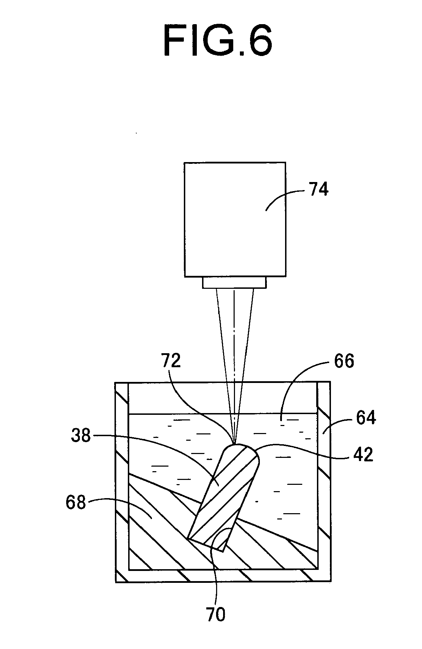

As depicted in model form in FIG. 6, in the present embodiment, a tank 64 open at the top is filled with a liquid 66. While any of various liquids can be employed as the liquid 66, in the present embodiment, distilled water is used so as to limit the reduction in energy of the laser beam caused by admixed impurities. Here, while no particular limitation is imposed as to the temperature of the liquid 66, in the present embodiment it is set to normal temperature of between 20°C and 25°C.

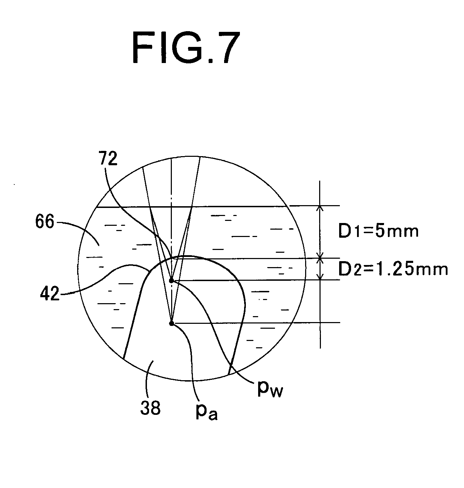

A jig 68 adapted to support the upper die core 38 is positioned inside the tank 64. An insertion hole 70 that opens upward at a moderate incline with respect to the vertical direction is formed in the jig 68, and the upper die core 38 is supported by being inserted into the insertion hole 70. The upper die core 38, with the resin molding face 42 at the top, is thereby supported by the jig 68 while being held with the direction of its axis somewhat inclined from the vertical. Here, the entire upper die core 38 inclusive of the resin molding face 42 is submerged in the liquid 66; as depicted in FIG. 7, on the resin molding face 42, an irradiation position 72 provided as a location which corresponds to the objective mark 26 of the contact lens 10 is submerged in the liquid 66. In this embodiment in particular, as depicted in FIG. 7, the shape of the jig 68 and the depth of the liquid 66 have been adjusted such that the depth: D1 from the surface of the liquid 66 to the irradiation position 72 equals 5 mm.

A laser machining unit 74 is installed in the air above the upper die core 38. The laser used in the present invention may be any of the various kinds of lasers suitable for machining of dies, for example, a YAG laser, a carbon dioxide laser, an excimer laser, a semiconductor laser or the like; in preferred practice, a femtosecond laser that produces pulses of extremely short duration (10⁻¹⁵ s) will be employed so as to have less thermal effect on the workpiece than do other lasers. The laser beam emitted by the laser machining unit 74 will pass through the liquid 66 and fall on the irradiation position 72, thus inducing melting at the irradiation position 72 to produce the concave engraved mark 62 that corresponds in shape to the mark 26. While it is possible for the engraved mark 62 to take any of various forms such as an alphanumeric character or graphic symbol, in the present embodiment, the relative locations of the upper die core 38 and the laser machining unit 74 are fixed, and the shape of the engraved mark 62, e.g. an alphanumeric character or graphic symbol, is produced through control of the optical path of the laser beam by a program installed in the laser machining unit 74, by varying the direction of movement of the irradiation position in the optical system inside the laser machining unit 74. However, it would also be possible to produce the shape of the engraved mark 62 by varying the relative locations of the upper die core 38 and the laser machining unit 74.

Moreover, as depicted in FIG. 7, since the laser beam output by the laser machining unit 74 undergoes deflection as it enters the liquid 66, the focal position: Pw within the liquid 66 will be shifted upward as compared to the focal position: Pa in air. Accordingly, in this embodiment, the focal position: Pw within the liquid 66 will be set to a location below the irradiation position 72, at a distance: D2 of 1.25 mm in the vertical direction from the irradiation position 72.

Thus, during resin molding of the lens molding female mold 54 using the female mold molding die 34, the engraved mark 62 which has been formed on the resin molding face 42 of the female mold molding die 34 will become transferred to the lens molding face 58 of the lens molding female mold 54. As a result, on the lens molding face 58 of the lens molding female mold 54, in a section thereof corresponding to the formation location of the objective mark 26 on the contact lens 10, there will be formed a mark convex portion 76 of convex shape corresponding to the mark 26.

Next, the objective contact lens 10 is molded using the lens molding female mold 54 having the mark convex portion 76 formed thereon, and the lens molding male mold 56 obtained through resin molding using the male mold molding die.

To do so, first, as depicted in FIG. 8, with the lens molding female mold 54 supported with its opening facing vertically upward, a polymerizable monomer 80 serving as the material for the contact lens 10 will be injected through an injection tube 78 into a tray-shaped zone formed by the concave lens molding face 58. This polymerizable monomer 80 can be any of various appropriate liquid monomer compositions commonly used as materials for soft contact lenses or hard contact lenses. For example, compositions incorporating one or more different radical polymerizable compounds, or composed of macromers or prepolymers, could be used. The compounds may be optionally combined with appropriate crosslinking agents, sensitizers, thermal polymerization initiators, photopolymerization initiators, as needed.

Next, as depicted in FIG 9, the lens molding female mold 54 will be mated with the lens molding male mold 56 by juxtaposing and inserting it therein in the axial direction (the vertical in FIG. 9), thereby defining a sealed mold cavity 82 that is filled with the polymerizable monomer 80. Then, while maintaining the molds 54, 56 in the mated state, the polymerizable monomer 80 will be subjected to a polymerization process. The polymerization process may be a photopolymerization process, a thermal polymerization process, or the like, selected appropriately according to the polymerizable monomer 80 that is being used.

Once the polymerizable monomer 80 has been polymerized, the lens molding female mold 54 and the lens molding male mold 56 will be parted and the polymerized molded article, namely the contact lens 10, will be released from the mold to obtain the desired contact lens 10. Mold release of the contact lens 10 can be accomplished, for example, by inducing bending deformation of the lens molding face 60 by squeezing the tubular part of the lens molding male mold 56 in the axis-perpendicular direction so that the contact lens 10, which upon parting now adheres to the lens molding face 60 of the lens molding male mold 56, becomes released from the lens molding face 60; or by release using an appropriate chemical product.

In the contact lens 10 that has been polymerization-molded and released from the mold in the above manner, the lens front face 12 will have been shaped by the contours of the lens molding face 58 of the lens molding female mold 54, while the lens rear face 14 will have been shaped by the contours of the lens molding face 60 of the lens molding male mold 56. The engraved mark 62 that was formed on the resin molding face 42 of the upper die core 38 which makes up the female mold molding die 34 will have been transferred to the lens molding face 58 of the lens molding female mold 54 as the mark convex portion 76; and in turn the mark convex portion 76 will have been transferred to the lens front face 12 of the contact lens 10, thereby forming the concave mark 26 of contours corresponding to the engraved mark 62 at the objective location of the peripheral zone of the contact lens 10.

According to this manufacturing method, uplift of the outside peripheral edge of the engraved mark 62, that is, uplift: h of the lip portion 32 of the mark 26 depicted in FIG. 3, can be kept to a low level. At the same time, appreciable roughness can be imparted to the surface of the engraved mark 62, that is, to the surface 30 of the mark 26 in FIG. 3. Thus, in the contact lens 10 produced according to the manufacturing method of the present invention, contact pressure against the eyelid can be reduced, thereby affording good wear comfort and movement of the lens, as well as affording good visibility in the mark 26.

The scientific reasons why it is possible, through laser machining carried out with the irradiation position 72 submerged in the liquid 66, to limit uplift of the outside peripheral edge of the engraved mark 62 while at the same time achieve large surface roughness are not entirely clear; however, while it is not an object of this invention to elucidate the scientific reasons therefor, with regard to the ability to limit uplift, it is possible that the fact that the process takes place in liquid means that, due to reduced evolution of heat in the vicinity of the irradiation position 72, there is less swelling of the outer peripheral edge of the engraved marks 62 caused by thermal deformation; and with regard to the ability to produce a high degree of surface roughness, it is possible that because evolution of heat in the vicinity of the focal position is limited, melting takes place intensively at the focal position, and redeposition of swarf produced by laser machining onto the irradiation position 72 will be limited, thereby avoiding a reduction in energy density of the laser beam caused by swarf.

In this manufacturing method, the engraved mark 62 is produced through laser machining of the female mold molding die 34, and the engraved mark 62 is then transferred to the lens front face 12 through the agency of the lens molding female mold 54. For this reason, even where contact lenses 10 furnished with a mark 26 are produced in large quantities, the labor that would be entailed by laser machining of each individual contact lens 10 can be avoided, and contact lens 10 productivity can be improved.

Moreover, in this manufacturing method, by carrying out laser machining in liquid, swarf produced during laser machining can be prevented from becoming deposited on the die, obviating the need for a washing process to remove the swarf, so that better production efficiency is afforded.

While a preferred embodiment of the present invention has been described in detail hereinabove, this is merely exemplary, and the embodiments of the present invention should in no way be construed as limited to the specific disclosure herein. In the following description, components and parts that are substantially comparable to those in the preceding embodiment are assigned like symbols, and will not be discussed in any detail.

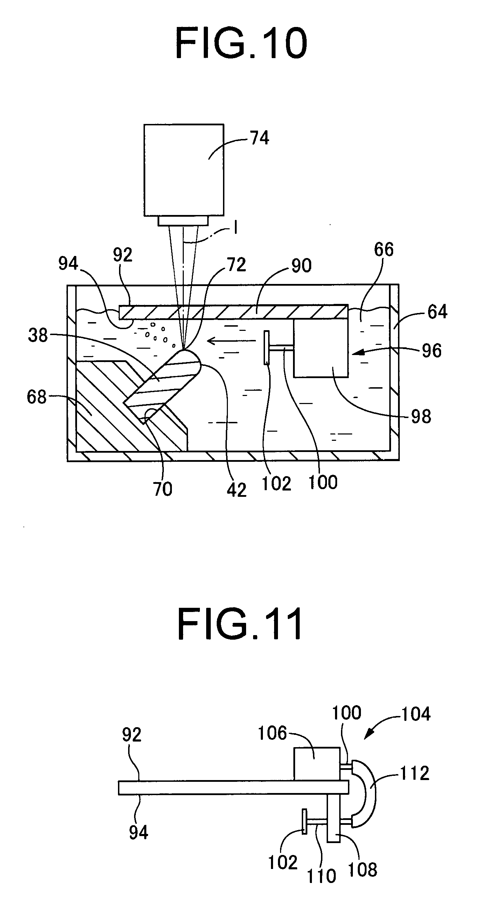

For example, FIG. 10 depicts in model form a different mode of laser machining in liquid according to the present invention. In this mode, a ripple suppression plate 90 provided as a shield material is positioned at the surface of the liquid 66. The ripple suppression plate 90 is made of a light-transmissive member such as glass for example, and has a flat incidence face 92 and exit face 94. The ripple suppression plate 90 is immersed in the liquid 66 by a distance equal to one-third to one-half its thickness dimension. By so doing, the exit face 94 of the ripple suppression plate 90 will be submerged in liquid, while the incidence face 92 will be positioned above the surface of the liquid and exposed to the air.

A flow generating unit 96 is attached to the exit face 94 of the ripple suppression plate 90. The flow generating unit 96 is composed of a screw 102 attached to a drive shaft 100 of a motor 98. A motor of waterproof construction is used as the motor 98. Here, the screw 102 will be positioned at a height location approximately equal to the height location of the irradiation position 72 of the upper die core 38 which is supported on the jig 68.

The screw 102 is turned by driving of the motor 98, and gives rise to flow of the liquid 66 between the resin molding face 42 and the ripple suppression plate 90, in a direction going from the screw 102 towards the upper die core 38 (leftward in FIG. 10). In this state, a laser beam is emitted from the laser machining unit 74. After impinging on the incidence face 92 of the ripple suppression plate 90, the laser beam will be transmitted through the ripple suppression plate 90 and exit from the exit face 94, then pass through the liquid 66 and fall on the irradiation position 72.

In the present mode, flow of the liquid 66 between the irradiation position 72 and the ripple suppression plate 90 is created in a direction approximately orthogonal to the irradiation optical axis: 1 of the laser beam. For this reason, bubbles and swarf produced at the irradiation position 72 during laser machining will be carried away from the irradiation optical axis: 1 by this flow. Thus, the risk of diffraction caused by interference between the laser beam and bubbles, resulting in the beam falling on a position different from the desired position, as well as of reduced energy of the laser beam due to swarf, can be reduced and superior machining accuracy can be achieved. Additionally, since swarf is carried away by the flow, superior washing action can be achieved as well.

Furthermore, in the present mode, the ripple suppression plate 90 is positioned at the surface of the liquid 66 so that the laser beam impinges on the flat incidence face 92 of the ripple suppression plate 90. Thus, deflection of the laser beam in a direction different from the desired one by ripples arising on the surface of the liquid 66 will be limited, so that superior machining accuracy can be achieved. In the present mode in particular, due to the use of the flow generating unit 96 it is easy for ripples to arise on the surface of the liquid 66, but it is possible to advantageously avoid the effects of such ripples by providing the ripple suppression plate 90.

In the present mode, there has been shown by way of example a mode in which the ripple suppression plate 90 and the flow generating unit 96 are employed in combination, but it would of course be possible to employ either the ripple suppression plate 90 or the flow generating unit 96 by itself.

The specific construction of the flow generating unit 96 is not limited in any particular way. For example, where the motor lacks waterproof construction, it would be acceptable to use a flow generating unit 104 like that depicted in model form in FIG. 11. In this flow generating unit 104, a motor 106 lacking waterproof construction is positioned on the incidence face 92 of the ripple suppression plate 90. Meanwhile, a bearing 108 is disposed on the exit face 94 of the ripple suppression plate 90, and a rotating shaft 110 which has been integrally formed with or integrally attached to the screw 102 is rotatably supported by the bearing 108. The drive shaft 100 of the motor 106 and the rotating shaft 110 of the screw 102 are coupled by a coupling 112 formed of rubber or a spring for example. Thus, with the motor 106 positioned in the air, the screw 102 which is submerged in the liquid can be turned. The flow generating unit is not limited to one employing a screw, and a mode in which flow is generated by pressurizing means such as a pump for example could of course be employed as well.

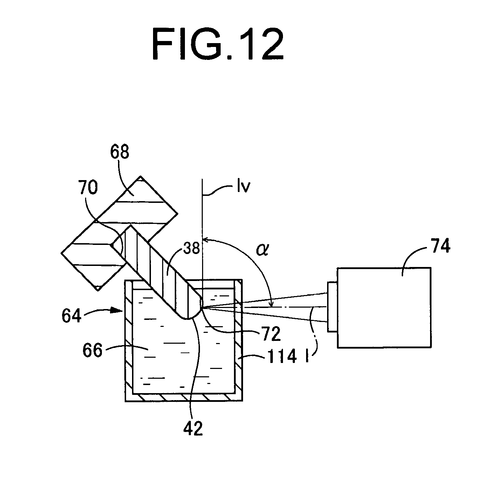

FIG. 12 depicts in model form yet another mode of laser machining in liquid according to the present invention. In the present mode, the jig 68 which supports the upper die core 38 is situated in the air outside the tank 64, and is positioned with the axial direction of the insertion hole 70 facing diagonally downward towards the liquid 66. Then, by inserting the upper die core 38 into the insertion hole 70, the upper die core 38 is supported on the jig 68, with its resin molding face 42 facing downward and with its distal end section inclusive of the resin molding face 42 submerged in the liquid 66.

Furthermore, in the present mode, the laser machining unit 74 is situated to the side of the tank 64, and is positioned to the opposite side from the resin molding face 42 of the upper die core 38, with a side wall 114 of the tank 64 between them. The laser beam emitted by the laser machining unit 74 will pass through the side wall 114 and impinge on the liquid 66, then fall on the irradiation position 72. Here, the angle: α that is formed by the irradiation optical axis: 1 of the laser beam emitted from the laser machining unit 74 and a vertical line: 1v extending upward from the irradiation position 72 adapted to be irradiated with the laser beam will preferably be 30° or greater; in the present embodiment, it is 90°.

By so doing, overlap between the direction of ascent (the substantially vertical direction) of bubbles which form during laser machining in liquid, and the direction of the irradiation optical axis: 1 of the laser beam, can be reduced. Interference between the bubbles and the laser beam can be reduced thereby, and problems such as diffraction of the laser beam due to such interference can be limited.

Moreover, in the present mode, the surface of the liquid 66 upon which the laser beam impinges will be a flat face due to the side wall 114 of the tank 64, thereby limiting situations in which the laser beam is diffracted in a direction different from the intended direction when impinging on the liquid 66. In this way, in the present mode, the side wall 114 of the tank 64 can be conceived of as a shield member.

From the present mode, it will be apparent that it is not essential that the die being subjected to laser machining be completely submerged in liquid, it being sufficient to submerge just that position that corresponds to the mark onto which the laser beam will be directed.

In each of the preceding modes, laser machining is carried out on the upper die core 38 which makes up the female mold molding die 34, and the mark 26 is formed on the lens front face 12; however, it would of course be possible to use the manufacturing method herein to form a mark on the lens rear face 14. Where forming a mark on the lens rear face 14, with the position corresponding to the mark on the resin molding face of the lower die core which makes up the male mold molding die (this corresponds to the resin molding face 50 of the lower die core 46 in FIG. 5) submerged in liquid, an engraved mark will be formed through laser machining carried out on the position corresponding to the mark, and the engraved mark will then be transferred to the lens molding face 60 of the lens molding male mold 56. By then molding the contact lens 10 using the lens molding male mold 56, a mark can be produced on the lens rear face 14.

It is not essential that the laser machining unit 74 be situated in the air, and where a laser machining unit equipped with waterproof means is employed, laser machining may be carried out with the laser emission aperture of the laser machining unit submerged in the liquid 66. By so doing, it will be possible to mitigate the effects of deflection occurring when a laser beam emitted in the air impinges on the surface of the liquid 66.

The engraved mark 62 and the mark 26 formed thereby are not limited as to specific shape, size, position, or number, and no particular limitation to those shown by way of example herein is imposed.

In the preceding embodiments, distilled water is used as the liquid in which the laser-machined part of the die is submerged, but the type of liquid employed in the present invention is not limited thereto. Specifically, by way of another embodiment of the present invention, the liquid in which the laser-machined part of the die is submerged could be an aqueous solution containing at least one compound selected from monohydric alcohols, polyhydric alcohols, surfactants, polysaccharides, and sodium chloride.

The specific components and formulations of aqueous solutions used in the present embodiment are not limited to any particular ones; for example as monohydric alcohols, any of various known monohydric alcohols such as ethanol, methanol, etc. could be favorably employed. As polyhydric alcohols there could be employed propylene glycol, ethylene glycol, glycerin or the like. As surfactants there could be employed nonionic surfactants such as polyoxyethylene hydrogenated castor oil, or anionic surfactants such as sodium lauryl sulfate, as well as any of various known compounds having surfactant action. As polysaccharides there could be employed various polysaccharides such as starches of various kinds, or agarose, dextrin, dextran, pullulan or the like. An aqueous solution containing a single class of these components as the sole component, or a mixed aqueous solution containing a combination of several classes selected from these components, would also be acceptable.

In the present embodiment, of the compounds listed above, the aqueous solution will preferably have as its components a single compound or combination of compounds selected from ethanol, propylene glycol, polyoxyethylene60 hydrogenated castor oil, sodium lauryl sulfate, and pullulan. Aqueous solutions containing the following specific formulations of these compounds are especially preferred. Specifically, the aqueous solution used for die submersion in the present embodiment is preferably a 2 to 5 w/v% propylene glycol aqueous solution, a 0.05 to 0.2 w/v% polyoxyethylene60 hydrogenated castor oil aqueous solution, a 0.02 to 0.1 w/v% sodium lauryl sulfate aqueous solution, or a mixed aqueous solution of 2 w/v% propylene glycol and 5 to 10 w/v% ethanol. Here, w/v% refers to (weight/volume) percent, e.g. a 2 w/v% propylene glycol aqueous solution indicates an aqueous solution of 2 g of propylene glycol diluted with 100 L of water.

By carrying out laser machining of the die in liquid using these aqueous solutions in accordance with the contact lens manufacturing method of the present embodiment, it will be possible to limit uplifting produced at the perimeter of the engraved mark to an even lower height, and to further improve wear comfort during contact wear. Additionally, through appropriate selection of an aqueous solution formulation from among the alcohols, surfactants, and other compounds mentioned above, surface roughness of the engraved mark and formation conditions of alphanumeric characters can be controlled in optimal fashion, so that engraved marks of better visibility can be produced. Furthermore, by selecting a formulation of the aqueous solution for advantageous control of the size of bubbles forming during laser irradiation, adhesion between bubbles and the die, dispersibility of swarf in association with bubble formation, and other factors, it will be possible to limit deflection or attenuation of the laser beam caused by interference between bubbles and the laser beam.

While not set forth herein, various other modifications, variations, and improvements to the present invention will be apparent to the skilled practitioner of the art. Such embodiments are not to be regarded as a departure from the spirit of the invention, and should be regarded as lying within the scope of the present invention.

### EXAMPLES

A series of tests carried out for the purpose of demonstrating the technological advantages afforded by the contact lens manufacturing method in accordance with the present invention are presented below by way of examples.

First, two specimens 120 made of material comparable to the female mold molding die 34 (upper die core 38) employed in production of the contact lens 10 according the preceding embodiment were prepared. The material of the specimens 120 was STAVAX (TM).

**[Table 1]**

| Item | Name or parameter |
|---|---|
| Laser machining unit | YVO₄ LASER MARKER MD-V9600, Keyence Co. |
| Wavelength | 1064 nm |
| Laser medium | YVO₄ |
| Class (JIS) | Class 4 |
| Q switch frequency | 10 kHz |
| Number of shots | 1 |
| Engraved pattern | '-' character (0.18 mm line width) |

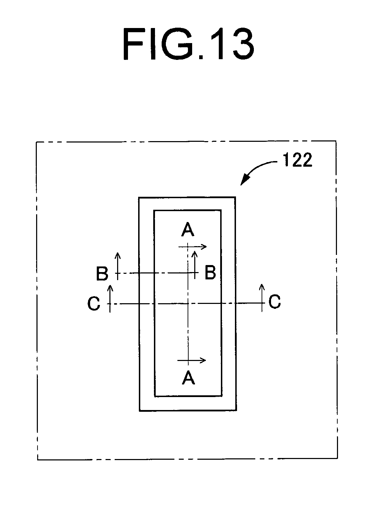

The surface of one of the specimens 120 was irradiated with a laser beam in the air to produce an engraved mark, while the surface of the other specimen 120 was irradiated with a laser beam in liquid to impart an engraved mark 122 like that shown in FIG. 13. Machining conditions common to both the process in air and that in liquid are given in Table 1. The line width (= 0.18 mm) of the engraved mark 122 was produced through automatic control of scan pitch on the laser machining unit side.

**[Table 2]**

| Item | Description |
|---|---|
| Irradiation distance | 386.92 mm |
| Output | 1.5 w |
| Scan speed | 15 mm/s |
| Number of scans | 1x |

**[Table 3]**

| Item | |
|---|---|
| Liquid | distilled water |
| Liquid temp. | normal temp. (20 -25°C) |
| Irradiation height benchmark | focal position in liquid |
| Irradiation position | Irradiation height benchmark + 1.25 mm (upward) |
| Water depth | 5 mm |
| Output | 3 w |
| Scan speed | 20 mm/s |
| Number of scans | 8x |

Machining conditions for the process in air are given in Table 2, and machining conditions for the process in liquid are given in Table 3. Here, the irradiation height benchmark (=focal position in liquid) corresponds to the focal position: Pw in FIG. 7, while the irradiation position (=irradiation height benchmark + 1.25 mm (upward)) corresponds to the irradiation position 72 in FIG. 7. The water depth (= 5 mm) in Table 3 indicates depth of the irradiation position 72 from the liquid surface.

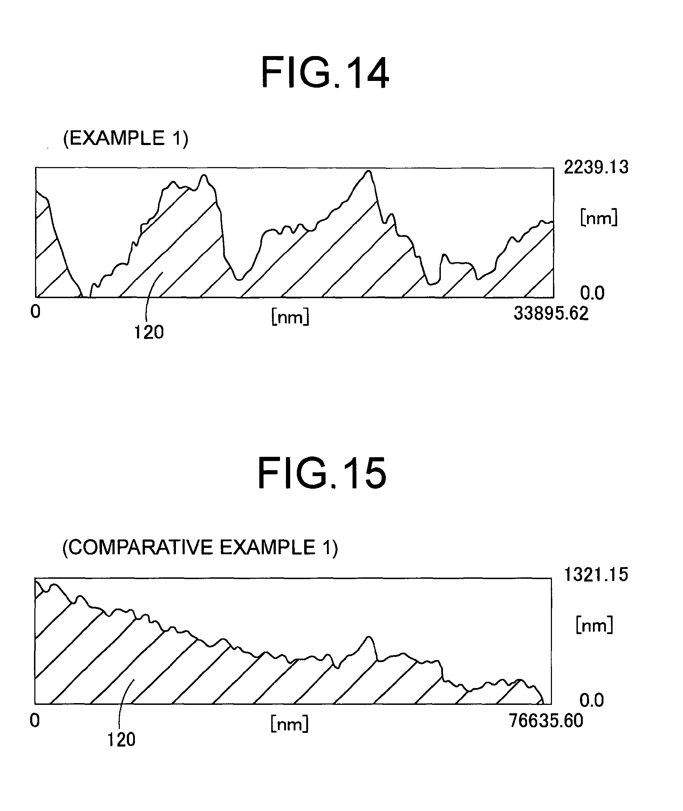

An engraved mark 122 produced by laser machining of the specimen 120 in liquid under the machining conditions given above is depicted in enlarged cross sectional view as Example 1 in FIG. 14; an engraved mark 122 produced by laser machining of the specimen 120 in air is depicted in enlarged cross sectional view as Comparative Example 1 in FIG. 15. Example 1 and Comparative Example 1 correspond to the A-A cross section in FIG. 13.

The results given in FIGS. 14 and 15 also demonstrate that in Example 1 involving laser machining in liquid, the specimen 120 surface contours are larger, and surface roughness is greater, as compared with Comparative Example 1 involving laser machining in the air.

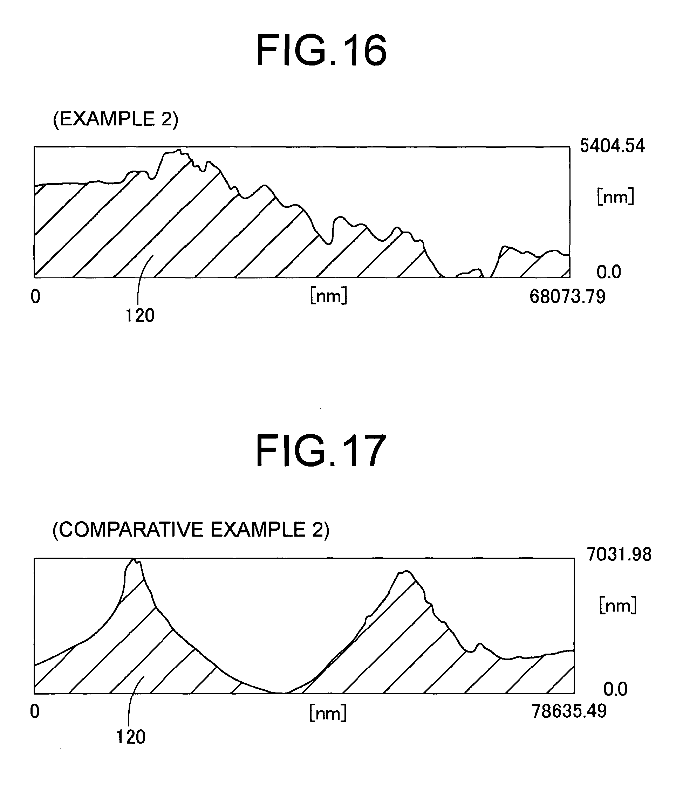

An engraved mark 122 produced by laser machining of the specimen 120 in liquid is depicted in enlarged transverse sectional view as Example 2 in FIG. 16; an engraved mark 122 produced by laser machining of the specimen 120 in air is depicted in enlarged transverse sectional view as Comparative Example 2 in FIG. 17. Example 2 corresponds to the B-B cross section in FIG. 13; Comparative Example 2 corresponds to the C-C cross section in FIG. 13.

The results given in FIGS. 16 and 17 also demonstrate that in Example 2 involving laser machining in liquid, formation of swelling with steep contours at the outside peripheral edge of the engraved mark 122 in the specimen 120 will be reduced as compared with Comparative Example 2 involving laser machining in the air.

**[Table 4]**

| | Surface roughness | Depth | Peripheral zone height | Visibility |
|---|---|---|---|---|
| Comparative. Ex. 3 (air) | 0.09 | 2.3 | 4.7 | × |
| Example 3 (8x scanning in liquid) | 0.32 | 3.9 | 1.4 | O |
| Example 4 (1x scanning in liquid) | 0.29 | 1.8 | 1.1 | Δ |
| unit: µm | | | | |

Under machining conditions comparable to those in Examples 1 and 2 above, laser machining of the surface of the specimen 120 was carried out in liquid; results of measuring engraved mark 122 surface roughness, engraved mark 122 depth, and height of the peripheral zone of the engraved mark 122, as well as of an evaluation of visibility of the engraved mark 122, are given as Example 3 in Table 4. Results of measuring and evaluating these same items where laser machining of the surface of the specimen 120 was carried out in air under machining conditions comparable to those in Comparative Examples 1 and 2 are also shown as Comparative Example 3 in Table 4. For reference, results of measurement and evaluation of an engraved mark 122 produced by laser machining carried out in liquid under machining conditions comparable to those in Examples 1 and 2, except for changing the number of scans in Examples 1 and 2 to 1x, are also shown as Example 4 in Table 4.

As will be apparent from Table 4, it was demonstrated that in Example 3 involving laser machining in liquid, surface roughness is greater as compared with Comparative Example 3 involving laser machining carried out in the air. It was further demonstrated that in both Example 4 involving scanning a single time in liquid, and Example 3 involving scanning eight times, surface roughness was substantially unchanged; and that with scanning a single time in liquid (Example 4), greater surface roughness was obtained than in Comparative Example 3 involving laser machining carried out in the air.

In Example 4 and Comparative Example 3 it was demonstrated that, despite the number of scans being the same and the depth dimension being substantially equal, in Example 4 involving laser machining carried out in liquid, the height dimension of the peripheral zone of the engraved mark 122 was smaller than in Comparative Example 3 involving laser machining carried out in the air. Furthermore, it was demonstrated that, in Example 3 involving scanning eight times, despite the greater depth the increase in height dimension of the peripheral zone was minimal as compared with Example 4 involving scanning a single time; and that with laser machining carried out in liquid, it is possible to limit the height dimension of the peripheral zone.

It was further demonstrated that in Example 3 involving laser machining carried out in liquid, due to greater surface roughness and depth, visibility was improved as compared with Comparative Example 3 involving laser machining carried out in the air.

As shown by Tables 2 and 3, the machining conditions of output, scan speed, and number of scans will differ between a process carried out in the air and one in a liquid; the reason for this is that because the energy of the laser beam is attenuated in liquid, machining will not proceed satisfactorily if machining conditions are identical to those used for a process carried out in the air. For this reason, an examination was made as to conditions that would afford depth (which has an appreciable effect on visibility of a mark) comparable to a process carried out in air, as a result of which machining conditions like those given in Table 3 were obtained. However, as will be apparent from Table 4, it was demonstrated that height of the peripheral zone will be held to a lower level than with a process carried out in the air, even where the number of scans in the process carried out in a liquid is eight versus a single scan in the process carried out in the air; and it is accordingly clear that differences in machining condition have no effect on the results of the comparison. Such differences may be said to more clearly show the superiority of the present invention.

Next, another set of tests carried out in relation to contact lenses produced in accordance with the embodiment of the present invention will be described.

Specifically, in these tests, under conditions substantially similar to those in Examples 1 to 4 discussed previously, the tests were carried out using different components in the liquid in which the laser-machined part is submerged. Specifically, a STAVAX (TM) die was positioned in a tank, and the tank was filled with various different test solutions. The die in the liquid was then irradiated with a laser beam to form an engraved mark, while monitoring conditions of bubble formation and dispersibility of swarf. Irradiation conditions other than the submersion liquid composition are shown in Table 5, and are generally identical to those in Examples 1 to 4.

**[Table 5]**

| Item | Name or parameter |
|---|---|
| Laser machining unit | YVO₄ LASER MARKER MD-V9600, Keyence Co. |
| Wavelength | 1064 nm |
| Laser medium | YVO₄ |
| Class (JIS) | Class 4 |
| Q switch frequency | 10 kHz |
| Number of shots | 1 |
| Engraved pattern | '-'character (0.18 mm line width) |
| Liquid | distilled water or various aqueous solutions |
| Liquid temp. | normal temp. (20 -25°C) |
| Irradiation height benchmark | focal position in liquid |
| Irradiation position | Irradiation height benchmark + 1.00 mm (upward) |
| Water depth | 5 mm |
| Output | 3 w |
| Scan speed | 20 mm/s |
| Number of scans | 8x |

Next, using the engraved dies fabricated in this manner, an examination was made of the conditions of marking using a differential interference microscope and with the naked eye. An atomic force microscope (ATM) was then used to measure depth and surface roughness of the engraved marks, and the height of the upheaved section formed at the engraved mark perimeter. Conditions for measurement used for the AFM are given in Table 6 below.

**[Table 6]**

| Item | Parameter |
|---|---|
| Cantilever | SI-DF3 (spring constant 1.2 N/m; resonance frequency 25 kHz) |
| Scanner | 100 µm (X/Y sensitivity 300 nm/V, Z sensitivity 27.2 nm/V) |
| Scan area | 80 × 80 µm |

The test results are shown as Examples 5 to 23 in Tables 7 to 9 below. The components of the test liquids used in the examples are given in Tables 7 to 9 below. Specifically, in Examples 5 to 22, various aqueous solutions each containing at least one class of compound selected from monohydric and polyhydric alcohols, surfactants, polysaccharides, and sodium chloride were used as the liquid for submerging the die. In Example 23, as in Examples 1 to 4 discussed earlier, distilled water was used as the submerging liquid.

Tables 7 to 9 also show results of observation of conditions of bubble formation during laser machining using each aqueous solution, and of the condition of engraved marks formed thereby. The evaluation criteria used in these evaluations, denoted by the symbols ⊚, ○, Δ, and × in Tables 7 to 9, are explained in Table 10 below. As explained in Table 10, the evaluation "Bubbles" in the results column in Tables 7 to 9 is an overall evaluation which encompasses the number and size of bubbles forming in the liquid during laser irradiation, adhesion of bubbles to the die, and scatter of swarf in association with bubble formation. Greater diffusion and finer size of bubbles will result in more deflection and energy attenuation of the laser beam. Poor diffusibility of swarf poses a risk that swarf which does form will impair irradiation by the laser beam, or become redeposited on the die. Next, "Scatter" relates to a phenomenon whereby, in the process of engraving a groove-shaped recess through irradiation with a laser beam, for some reason such as scattering of the laser beam, tiny depressions form at sites away from the intended groove formation area, producing the impression of dots scattered from the engraved alphanumeric character; it is evaluated in terms of the extent to which dots diverge from the engraved mark formation zone. "Character morphology" evaluates whether lines formed in alphanumeric characters etc. that have been engraved by laser irradiation are thin and uniform throughout the entire character, or whether the lines are indistinct or thick and blurry. While the cause of such indistinct lines are poorly understood, in contrast to the phenomenon of divergence from prescribed dot position which is evaluated in terms of "Scatter" as discussed above, this phenomenon represents a condition of localized decline in focusing conditions of the laser.

**[Table 7]**

| | | Ex. 5 | Ex.6 | Ex.7 | Ex. 8 | Ex.9 | Ex.10 |
|---|---|---|---|---|---|---|---|
| Submerging liquid | Group | Polyhydric alcohol | | | | Monohydric alcohol | |
| | Component | Propylene glycol | | Glycerin | | Ethanol | |
| | Conc. (w/v) | 2% | 5% | 2% | 5% | 20% | 50% |
| Result | Bubbles | × | × | ○ | ○ | 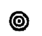 | 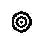 |
| | Scatter | ○ | ○ | × | × | Δ | Δ |
| | Character morphology | ○ | ○ | Δ | Δ | Δ | × |
| | Surface roughness | 0.31 | 0.37 | 0.28 | 0.28 | 0.32 | 0.29 |
| | Depth | 3.1 | 3.2 | 3.9 | 3.9 | 3.2 | 2.8 |
| | Peripheral zone height | 0.5 | 0.6 | 0.8 | 1.0 | 0.7 | 0.4 |
| unit: µm | | | | | | | |

**[Table 8]**

| | | Ex. 11 | Ex. 12 | Ex. 13 | Ex. 14 | Ex. 15 | Ex. 16 |
|---|---|---|---|---|---|---|---|
| Submerging liquid | Group | Surfactant | | | | Poly-saccharide | Salt |
| | Component | Polyoxyethylene60 hydg. castor oil | | Sodium lauryl sulfate | | Pullulan | NaCl |
| | Conc. (w/v) | 0.05% | 0.2% | 0.02% | 0.1% | 1% | 30% |
| Result | Bubbles | Δ | Δ | Δ | Δ | × | × |
| | Scatter | ○ | ○ | ○ | ○ | ○ | ○ |
| | Character morphology | ○ | ○ | ○ | ○ | Δ | Δ |
| | Surface roughness | 0.47 | 0.3 | 0.29 | 0.57 | 0.31 | 0.34 |
| | Depth | 4.4 | 3.3 | 3.7 | 3.7 | 3.1 | 3.3 |
| | Peripheral zone height | 0.8 | 1.0 | 0.8 | 0.6 | 0.6 | 0.7 |
| unit: µm | | | | | | | |

**[Table 9]**

| | | Ex. 17 | Ex. 18 | Ex. 19 | Ex. 20 | Ex. 21 | Ex. 22 | Ex. 23 |
|---|---|---|---|---|---|---|---|---|
| Submerging liquid | Group | Polyhydric alcohol + monohydric alcohol | | | | | | Distilled water |
| | Component | Propylene glycol + ethanol | | | | | | |
| | PPG conc. (w/v) | 2% | 2% | 2% | 2% | 5% | 5% | - |
| | Ethanol conc. (w/v) | 5% | 20% | 10% | 15% | 10% | 15% | - |
| Result | Bubbles | Δ | 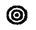 | ○ | ○ | Δ | Δ | Δ |
| | Scatter | ○ | ○ | ○ | ○ | Δ | ○ | Δ |
| | Character morphology | ○ | Δ | ○ | Δ | Δ | × | Δ |
| | Surface roughness | 0.3 | 0.24 | 0.55 | 0.28 | 0.36 | 0.25 | 0.41 |
| | Depth | 3.3 | 3.1 | 3.6 | 3.2 | 3.3 | 2.9 | 5.0 |
| | Peripheral zone height | 0.9 | 0.7 | 0.5 | 0.6 | 0.5 | 0.6 | 1.3 |
| unit: µm | | | | | | | | |

**[Table 10]**

| Evaluation | | 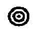 | ○ | Δ | × |
|---|---|---|---|---|---|
| Bubbles | Number, size | many, fine | moderate, medium | few, large | few, large |
| | Die adhesion | almost none | some | present | present |
| | Swarf scatter | good | fair | fairly poor | poor |
| | | | | | |

| Evaluation | | | ○ | Δ | × |
|---|---|---|---|---|---|
| Scatter | | | virtually no scatter | some scatter | scatter |
| Character morphology | | | thin, uniform thickness | somewhat thick | thick, with nonuniform thickness |

As the results shown in Tables 7 to 9 make clear, in Examples 5 to 22 involving laser machining carried out using different aqueous solutions, peripheral zone height was kept to very small values of between 0.4 and 1.0 µm, which are even smaller than the peripheral zone height of 1.3 µm obtained using distilled water. That is, it is apparent that by carrying out laser machining of the die in various different aqueous solutions containing at least one compound selected from propylene glycol and glycerin as the polyhydric alcohols, ethanol as the monohydric alcohol, polyoxyethylene60 hydrogenated castor oil and sodium lauryl sulfate as the surfactant, pullulan as the polysaccharide, and sodium chloride, the height of uplift formed at the engraved mark peripheral zone can be limited to low levels, and lens wear discomfort associated with uplift of the peripheral zone in association with engraved mark formation can be reduced.

Additionally, with respect to the parameters of surface roughness and depth which relate to visibility of the engraved mark, Examples 5 to 22 involving the use of different aqueous solutions gave values equal to or greater than those in Example 23 employing distilled water. That is, it is apparent that by carrying out laser machining in liquid using these aqueous solutions, it will be possible to obtain a contact lens imparted with a mark of exceptionally good visibility, comparable to that afforded by laser machining in distilled water.

In these tests, conditions of bubble formation during laser irradiation, and morphology of alphanumeric characters formed thereby were observed carefully. As will be clear from Tables 7 to 9, particularly in Examples 17 to 20 which employed a mixed aqueous solution of 2 w/v% propylene glycol and 5 to 10 w/v% ethanol, bubble formation conditions, dot scatter of the engraved mark, and character morphology all gave excellent results, demonstrating particularly good suitability as the submerging liquid.

Additionally, from the results of Examples 5 to 8 it will be appreciated that propylene glycol is superior to glycerin as the polyhydric alcohol mixed into the submerging liquid. From the results of Examples 9 and 10 it will be appreciated that in preferred practice the concentration of the ethanol as the monohydric alcohol will be less than 50%w/v. From the results of Examples 17 to 22 it will be appreciated that, where a combination of propylene glycol as the polyhydric alcohol and ethanol as the monohydric alcohol is used, in preferred practice the concentration of propylene glycol will be less than 5%w/v, and the concentration of ethanol will be less than 15%w/v.

Next, yet another set of tests carried out in relation to contact lenses produced in accordance with the embodiment of the present invention will be described.

In the preceding tests, laser machining was carried out on specimens 120 and dies made of STAVAX (TM); in these tests, however, laser machining was carried out using a die core made of phosphor bronze and a die core made of aluminum, and engraved mark formation conditions were examined.

Parameters for laser machining in these tests are given in Table 11 below.

**[Table 11]**

| Item | Name or parameter | |
|---|---|---|
| Machining process | in air | in liquid |
| Laser machining unit | YVO₄ LASER MARKER MD-V9600, Keyence Co. | |
| Wavelength | 1064 nm | |
| Laser medium | YVO₄ | |
| Class (JIS) | Class 4 | |
| Q switch frequency | 10 kHz | |
| Number of shots | 1 | |
| Engraved pattern | numeral (0.18 mm line width) | letter (0.18 mm line width) |
| Liquid | - | distilled water |
| Liquid temp. | - | normal temp. (20 -25°C) |
| Irradiation height benchmark | focal position in air | focal position in liquid |
| Irradiation position | Irradiation height benchmark + 1.00 mm (upward) | |
| Water depth | - | 5 mm |
| Output | 1.5 w | 3 w |
| Scan speed | 120 mm/s | 20 mm/s |

Results of measuring engraved mark surface roughness, engraved mark depth, and height of the peripheral zone when laser machining of the die surface was carried out in the air and in liquid are presented in Table 12 as Comparative Examples 4 and 5 and Examples 24 and 25.

**[Table 12]**

| | Comp. Ex. 4 | Comp. Ex. 5 | Ex. 24 | Ex. 25 |
|---|---|---|---|---|
| Condition | in air | | in liquid | |
| Specimen | phosphor bronze | aluminum | phosphor bronze | aluminum |
| Surface roughness | 0.18 | 0.18 | 0.23 | 0.35 |
| Depth | 2.9 | 3.7 | 4.5 | 8.1 |
| Periph. zone height | 3.0 | 3.4 | 0.6 | 0.5 |
| Number of scans | 8x | 5x | 5x | 3x |
| unit: µm | | | | |

It is clear from Table 12 that both when the material of the specimens is phosphor bronze and when it is aluminum, Examples 24 and 25 involving laser machining carried out in liquid afforded greater surface roughness than do Comparative Examples 4 and 5 involving laser machining carried out in the air.

In both Examples 24 and 25 involving laser machining carried out in liquid, despite greater engraved mark depth than in Comparative Examples 4 and 5, the height of the peripheral zone was very low, demonstrating that laser machining in liquid advantageously limits the height dimension of the peripheral zone.

Additionally, as shown in FIG. 12, in these tests, the machining parameters of output, scan speed, and number of scans differ between the process in the air and that in liquid; the reason is that, as with the tests described earlier using STAVAX (TM) specimens 120 shown in Tables 2 and 3, these differences are intended to adjust for energy attenuation of the laser beam which occurs in liquid.

## Claims

1. A manufacturing method of a contact lens with a mark using a resin mold which has been molded in a die to mold at least one lens face among a convex lens front face and a concave lens rear face and to provide a mark to at least one of the front face and the rear face, the method being **characterized by** the steps of:
carrying out engraving by irradiating a laser beam onto a location on the die which corresponds to the objective mark while the location is submerged in a liquid; and
transferring the engraved mark via the resin mold to impart the mark to at least one of the lens front face and the lens rear face.

2. The manufacturing method of a contact lens with a mark according to claim 1, wherein during irradiation of the die by the laser beam, an irradiation optical axis of the laser beam onto the die is inclined by 30 degrees or more with respect to a vertical line extending upward from the die.

3. The manufacturing method of a contact lens with a mark according to claim 1 or 2, wherein the die is irradiated with the laser beam while creating flow of the liquid in which the location on the die corresponding to the objective mark has been submerged.

4. The manufacturing method of a contact lens with a mark according to any one of claims 1-3, wherein the laser beam impinges on the liquid and irradiates on the die through a shield material adapted to transmit the laser beam and positioned in intimate contact against a surface of the liquid which is a laser beam incidence face.

5. The manufacturing method of a contact lens with a mark according to any one of claims 1-4, wherein the liquid comprises distilled water.

6. The manufacturing method of a contact lens with a mark according to any one of claims 1-4, wherein the liquid comprises an aqueous solution containing at least one compound selected from monohydric alcohols, polyhydric alcohols, surfactants, polysaccharides, and sodium chloride.

7. The manufacturing method of a contact lens with a mark according to claim 6, wherein the aqueous solution containing at least one compound selected from ethanol as the monohydric alcohol, propylene glycol as the polyhydric alcohol, polyoxyethylene60 hydrogenated castor oil or sodium lauryl sulfate as the surfactant, and pullulan as the polysaccharide, is used as the liquid.

8. The manufacturing method of a contact lens with a mark according to claim 7, wherein the liquid comprises a mixed aqueous solution of propylene glycol and ethanol.

9. The manufacturing method of a contact lens with a mark according to claim 7, wherein the liquid comprises the aqueous solution selected from a 2 to 5 w/v% propylene glycol aqueous solution, a 0.05 to 0.2 w/v% polyoxyethylene60 hydrogenated castor oil aqueous solution, a 0.02 to 0.1 w/v% sodium lauryl sulfate aqueous solution, and a mixed aqueous solution of 2 w/v% propylene glycol and 5 to 10 w/v% ethanol.

10. The manufacturing method of a contact lens with a mark according to any one of claims 1-9, wherein a molding face of the die that is imparted with the engraved mark is made of either stainless steel, aluminum, high-speed steel, prehardened steel, or phosphor bronze.

11. The manufacturing method of a contact lens with a mark according to any one of claims 1-10, wherein the mark comprises an alphanumeric character and graphic symbol.

12. A contact lens with a mark having at least one lens face among a convex lens front face and a concave lens rear face thereof formed using a resin mold that has been formed by a die, at least one of the front face and the rear face being imparted with a mark produced through transfer thereto, through the agency of the resin mold, of an engraved mark that has been formed on a molding face of the die by irradiation with a laser beam, the contact lens with a mark being **characterized in that**:
surface roughness: Ra of the mark is 0.2 µm or greater.

13. The contact lens with a mark according to claim 12, wherein a height dimension of an outside peripheral edge part of the mark is 1.5 µm or less.

14. The contact lens with a mark according to claim 12 or 13, wherein a depth dimension of the mark is between 3 µm and 15µm.
